# EUROPÄISCHE PATENTANMELDUNG

(11) **EP 1 777 856 A1**
(43) Veröffentlichungstag der Anmeldung: **25.04.2007**
(21) Anmeldenummer: 06020801.4
(22) Anmeldetag: 04.10.2006
(51) Int. Cl.: H04L 1/16, H04L 12/28, H04B 1/16, H04M 1/73, G06F 1/32

(54) **Sende-/Empfangsvorrichtung**

(30) Priorität: 19.10.2005 DE 102005049931
(71) Anmelder: ATMEL Germany GmbH, 74072 Heilbronn (DE)
(72) Erfinder: Ferchland, Tilo, 01277 Dresden (DE); Mennenga, Menno, 01099 Dresden (DE); Poegel, Frank Dr., 01309 Dresden (DE); Römer, Atilla Dr., 01277 Dresden (DE)

(57) **Zusammenfassung**

Die Erfindung betrifft eine Sende-/Empfangsvorrichtung beinhaltend a) eine Antenne, b) eine Sende-/Empfangseinheit zum Senden und Empfangen von Daten nach einem Kommunikationsstandard, die eine mit der Antenne verbundene Sendeeinheit zum senden von ersten Datenrahmen an eine zweite Sende-/Empfangsvorrichtung und eine mit der Antenne verbundene Empfangseinheit zum Empfangen von zweiten Datenrahmen von der zweiten Sende-/Empfangsvorrichtung aufweist, und c) eine mit der Sende-/Empfangseinheit verbundene Kontrolleinheit zur Steuerung der Sende-/Empfangseinheit, wobei die Kontrolleinheit ausgebildet ist, (c1) die Sende-/Empfangseinheit anzuweisen, einen ersten Datenrahmen zu senden und (c2) von der Sende-/Empfangseinheit zweite Datenrahmen zu empfangen. Erfindungsgemäß weist die Sende-/Empfangseinheit eine mit der Empfangseinheit und der Kontrolleinheit verbundene Steuereinheit auf, die ausgebildet ist, d) einen innerhalb einer vorgegebenen Zeitspanne nach dem Senden des ersten Datenrahmens durch die Empfangseinheit empfangenen zweiten Datenrahmen auszuwerten und festzustellen, ob der zweite Datenrahmen eine Bestätigungsnachricht für den erfolgreichen Empfang des ersten Datenrahmens durch die zweite Sende-/Empfangsvorrichtung enthält, und e) den zweiten Datenrahmen nicht an die Kontrolleinheit weiterzuleiten, falls festgestellt wird, daß er die Bestätigungsnachricht enthält.

## Beschreibung

Die vorliegende Erfindung betrifft eine Sende-/Empfangsvorrichtung nach dem Oberbegriff des Patentanspruchs 1.

Die Erfindung liegt auf dem Gebiet der Datenübertragung. Wenngleich prinzipiell auf beliebige digitale Kommunikationssysteme zur bidirektionalen Datenübertragung anwendbar, werden die vorliegende Erfindung sowie die ihr zugrunde liegende Problematik nachfolgend anhand eines "ZigBee"-Kommunikationssystems gemäß IEEE 802.15.4 erläutert.

Zur drahtlosen Übertragung von Informationen über relativ kurze Distanzen (ca. 10m) können sog. "Wireless Personal Area Networks" (WPANs) verwendet werden. Im Gegensatz zu "Wireless Local Area Networks" (WLANs) benötigen WPANs zur Datenübertragung wenig oder sogar keine Infrastruktur, so daß kleine, einfache, energieeffiziente und kostengünstige Geräte für einen breiten Anwendungsbereich implementiert werden können.

Der Standard IEEE 802.15.4 spezifiziert niederratige WPANs, die mit Rohdatenraten bis 250 kbit/s und ortsfesten oder mobilen Geräten für Anwendungen in der industriellen Überwachung und Steuerung, in Sensornetzwerken, in der Automatisierung, sowie im Bereich der Computerperipherie und für interaktive Spiele geeignet sind. Neben einer sehr einfachen und kostengünstigen Implementierbarkeit der Geräte ist für derartige Anwendungen ein extrem geringer Energiebedarf der Geräte von entscheidender Bedeutung. So werden mit diesem Standard Batterielaufzeiten von mehreren Monaten bis zu mehreren Jahren angestrebt.

Bekannte Sende-/Empfangsvorrichtungen beinhalten eine Sende-/Empfangseinheit zum Senden und Empfangen von Daten nach einem Kommunikationsstandard und eine Kontrolleinheit zur Steuerung der Sende-/Empfangseinheit, so daß sich der Energiebedarf der gesamten Sende-/Empfangsvorrichtung aus demjenigen der Sende-/Empfangseinheit plus demjenigen der Kontrolleinheit ergibt.

Üblicherweise nimmt die Sende-/Empfangseinheit die auf der Ebene der physikalischen Schicht (PHY) des Kommunikationsstandards spezifizierten Funktionalitäten wahr, während die Kontrolleinheit diejenigen der MAC-Schicht und ggf. höherer Schichten übernimmt. Zu den PHY-Funktionalitäten zählen hierbei beispielsweise das Senden und Empfangen von PHY-Datenrahmen (PPDU) über den physikalischen Kanal (Modulation/Demodulation, Synchronisation etc.) sowie die Überprüfung der Kanalbelegung (clear channel assessment, CCA). Verfahren zum Erhöhen der Robustheit der Datenübertragung, wie z.B. das Bestätigen von erfolgreich empfangenen PHY-Datenrahmen durch Bestätigungsrahmen (acknowledgement frames, ACK), das weitere Vorgehen bei fehlgeschlagenen Übertragungsversuchen oder Anti-Kollisionsverfahren wie CSMA-CA (carrier sense multiple access with collision avoidance) sind dagegen auf MAC-Ebene spezifiziert.

Aufgrund von hieraus resultierenden temporären Aktivitäten und verschiedenen Betriebsmodi mit unterschiedlichem Bedarf an Betriebsenergie ist der Energiebedarf der Sende-/Empfangseinheit und/oder der Kontrolleinheit über der Zeit nicht konstant, sondern unterliegt starken Schwankungen. Nachteilig ist hierbei, daß in manchen der Zeitabschnitte, in denen z.B. die Sende-/Empfangseinheit einen erhöhten Energiebedarf aufweist, auch die Kontrolleinheit viel Betriebsenergie benötigt. Umgekehrt ist nicht auszuschließen, daß die Sende-/Empfangseinheit dann viel Energie erfordert, wenn die Kontrolleinheit ebenfalls einen erhöhten Bedarf hat. Die gesamte Sende-/Empfangsvorrichtung hat daher einen Energiebedarf, der hohe Spitzenwerte (peaks) aufweist. Die hieraus resultierenden Spitzenströme erhöhen nicht nur den durchschnittlichen Energiebedarf der Sende-/Empfangsvorrichtung, sondern erfordern nachteiligerweise ggf. eine größere Dimensionierung der Energieversorgungseinheit (Batterie).

Vor diesem Hintergrund liegt der Erfindung die Aufgabe zugrunde, eine einfach und kostengünstig zu implementierende und energiesparend zu betreibende Sende-/Empfangsvorrichtung anzugeben, die insbesondere einen geringeren Spitzenstromverbrauch aufweist.

Erfindungsgemäß wird diese Aufgabe gelöst durch eine Sende-/Empfangsvorrichtung mit den Merkmalen des Patentanspruchs 1.

Die erfindungsgemäße Vorrichtung weist folgende Einheiten auf: a) eine Antenne, b) eine Sende-/Empfangseinheit zum Senden und Empfangen von Daten nach einem Kommunikationsstandard, die eine mit der Antenne verbundene Sendeeinheit zum Senden von ersten Datenrahmen an eine zweite Sende-/Empfangsvorrichtung und eine mit der Antenne verbundene Empfangseinheit zum Empfangen von zweiten Datenrahmen von der zweiten Sende-/Empfangsvorrichtung aufweist, c) eine mit der Sende-/Empfangseinheit verbundene Kontrolleinheit zur Steuerung der Sende-/Empfangseinheit, wobei die Kontrolleinheit ausgebildet ist, die Sende-/Empfangseinheit anzuweisen, einen ersten Datenrahmen zu senden und von der Sende-/Empfangseinheit zweite Datenrahmen zu empfangen. Die Sende-/Empfangseinheit weist hierbei eine mit der Empfangseinheit und der Kontrolleinheit verbundene Steuereinheit auf, die ausgebildet ist, d) einen innerhalb einer vorgegebenen Zeitspanne nach dem Senden des ersten Datenrahmens durch die Empfangseinheit empfangenen zweiten Datenrahmen auszuwerten und festzustellen, ob der zweite Datenrahmen eine Bestätigungsnachricht für den erfolgreichen Empfang des ersten Datenrahmens durch die zweite Sende-/Empfangsvorrichtung enthält, und e) den zweiten Datenrahmen nicht an die Kontrolleinheit weiterzuleiten, falls festgestellt wird, daß er die Bestätigungsnachricht enthält.

Das Wesen der Erfindung besteht darin, die von der zweiten Sende-/Empfangsvorrichtung empfangenen zweiten Datenrahmen durch die Steuereinheit der Sende-/Empfangseinheit auszuwerten, zu überprüfen, ob sie die Bestätigungsnachricht enthalten und, falls dies zutrifft, den zweiten Datenrahmen nicht an die Kontrolleinheit weiterzuleiten. Durch diese Unterdrückung von Empfangsbestätigungsrahmen *schon in der Sende-*/*Empfangseinheit* wird vorteilhaft erreicht, daß die Kontrolleinheit nicht in einem aktiven Betriebszustand mit relativ hohem Energieverbrauch gehalten werden muß, um Empfangsbestätigungsrahmen zu empfangen, auszuwerten und entsprechend darauf zu reagieren. Auf diese Weise wird es ermöglicht, diejenigen Zeitabschnitte, in denen die Sende-/Empfangseinheit einen relativ hohen Energiebedarf aufweist, derart von denjenigen Zeitabschnitten, in denen die Kontrolleinheit relativ viel Betriebsenergie benötigt, zu entkoppeln, daß sie sich zeitlich nicht überlappen, so daß der Gesamtspitzenstrombedarf der Sende-/Empfangsvorrichtung sinkt. Insgesamt steigt die Batterielaufzeit der Sende-/Empfangsvorrichtung um bis zu ein Drittel.

Vorteilhafte Ausgestaltungen und Weiterbildungen der Erfindung sind den abhängigen Ansprüchen sowie der Beschreibung unter Bezugnahme auf die Zeichnung zu entnehmen.

In einer vorteilhaften Ausgestaltung weist die Kontrolleinheit mindestens zwei Betriebsmodi ("sleep", "active" oder ähnliches) mit unterschiedlich hohem Energieverbrauch auf und ist ausgebildet, in einen Energiesparmodus mit geringem Energieverbrauch zu wechseln, sobald sie die Sende-/Empfangs-einheit angewiesen hat, den ersten Datenrahmen zu senden. Vorzugsweise ist die Kontrolleinheit ausgebildet, den Energiesparmodus wieder zu verlassen, wenn sie einen Interrupt von der Steuereinheit empfängt. Durch das frühestmögliche Eintreten in den Energiesparmodus und/oder das spätestmögliche Verlassen desselben wird erreicht, daß die Zeitspanne, in der sich die Kontrolleinheit im Energiesparmodus befindet, verlängert wird. Hierdurch wird einerseits der zum Betrieb der Kontrolleinheit (und damit auch der Sende-/Empfangs-vorrichtung insgesamt) erforderliche Energiebedarf reduziert, andererseits aber auch der Gesamtspitzenstrombedarf gesenkt, da die Wahrscheinlichkeit des zeitlichen Zusammentreffens eines Spitzenstrombedarfs der Sende-/Empfangs-einheit mit einem Spitzenstrombedarf der Kontrolleinheit gesenkt wird.

Gemäß einer bevorzugten Weiterbildung weist die Steuereinheit vor dem Senden des ersten Datenrahmens die Empfangseinheit an, zu überprüfen, ob der für das Senden des ersten Datenrahmens vorgesehene Übertragungskanal belegt ist. Ergibt diese Überprüfung, daß der vorgesehene Übertragungskanal nicht belegt, d.h. frei ist (und nur in diesem Falle), weist die Steuereinheit die Sendeeinheit an, den ersten Datenrahmen zu senden. Hierdurch erfolgt sowohl die Überprüfung der Kanalbelegung selbst als auch die Aufforderung zur Überprüfung, die Auswertung des Überprüfungsergebnisses und die Aufforderung zum Senden des ersten Datenrahmens im Falle eines freien Übertragungskanals *innerhalb der Sende-*/*Empfangseinheit* und damit unabhängig von der Kontrolleinheit. Zumindest im Falle eines freien Kanals ist damit für die Sicherstellung der CSMA-CA/CCA-Funktionalitäten (carrier sense multiple access with collision avoidance, clear channel assessment) keine Interaktion zwischen der Sende/Emfangseinheit und der Kontrolleinheit erforderlich. Indem die Sende-/Empfangseinheit CSMA-CA/CCA-Funktionalitäten autonom übernimmt, wird vorteilhaft erreicht, daß die Kontrolleinheit weder in einem aktiven Betriebszustand mit relativ hohem Energieverbrauch gehalten werden muß, um CSMA-CA-Anweisungen zur Überprüfung der Kanalbelegung zu erteilen oder CCA-Ergebnisse auszuwerten und ggf. Sendeanweisungen zu erteilen, noch einen Energiesparmodus verlassen muß, um derartige Tätigkeiten durchzuführen. Hierdurch wird der zum Betrieb der Kontrolleinheit (und damit auch der Sende-/Empfangsvorrichtung insgesamt) erforderliche Energiebedarf reduziert, aber auch der Gesamtspitzenstrombedarf gesenkt.

In einer vorteilhaften Ausgestaltung informiert die Steuereinheit die Kontrolleinheit beispielsweise mittels eines Interrupts, falls innerhalb der vorgegebenen Zeitspanne kein zweiter Datenrahmen empfangen wird oder falls festgestellt wird, daß der zweite Datenrahmen die Bestätigungsnachricht nicht enthält. In diesen Fällen kann nicht von einem erfolgreichen Empfang des ersten Datenrahmens durch die zweite Sende-/Empfangsvorrichtung ausgegangen werden. Durch den Interrupt kann die Kontrolleinheit vorteilhaft vom Energiesparmodus in einen aktiven Modus wechseln, um entsprechende weitere Maßnahmen, wie z.B. ein erneutes Senden des ersten Datenrahmens, zu veranlassen.

Gemäß einer bevorzugten Weiterbildung ist die Steuereinheit zusätzlich mit der Sendeeinheit verbunden und weist einen Speicher auf. Die Steuereinheit speichert den ersten Datenrahmen im Zusammenhang mit dem erstmaligen Senden im Speicher ab, und veranlaßt selbständig (autonom), d.h. ohne Anweisung durch die Kontrolleinheit, daß die Sendeeinheit den ersten Datenrahmen erneut an die zweite Sende-/Empfangsvorrichtung sendet, falls innerhalb der vorgegebenen Zeitspanne kein zweiter Datenrahmen empfangen wird oder falls festgestellt wird, daß der zweite Datenrahmen die Bestätigungsnachricht nicht enthält. Hierdurch wird der erste Datenrahmen in denjenigen Fällen, in denen nicht von seinem erfolgreichen Empfang ausgegangen werden kann, von der Sende-/Empfangseinheit autonom erneut gesendet. Durch diese Maßnahme kann die Kontrolleinheit auch bei erfolglosen Übertragungsversuchen länger in einem Energiesparmodus verbleiben, so daß der Energiebedarf und der Gesamtspitzenstromverbrauch von Sende-/Empfangseinheit und Kontrolleinheit sinkt.

In einer vorteilhaften Ausgestaltung informiert die Steuereinheit die Kontrolleinheit beispielsweise mittels eines Interrupts erst dann, wenn auch nach einer vorgegebenen Anzahl von selbständigen Veranlassungen, den ersten Datenrahmen erneut an die zweite Sende-/Empfangsvorrichtung zu senden, innerhalb der vorgegebenen Zeitspanne nach dem jeweiligen erneuten Senden kein zweiter Datenrahmen empfangen wurde, der die Bestätigungsnachricht enthält. Hieraus ergibt sich vorteilhaft ein sinkender Energiebedarf und ein reduzierter Gesamtspitzenstromverbrauch.

Gemäß einer bevorzugten Weiterbildung wertet die Steuereinheit zunächst den *ersten* Datenrahmen aus und stellt fest, ob im Falle seines erfolgreichen Empfangs durch die zweite Sende-/Empfangsvorrichtung überhaupt die Bestätigungsnachricht erwartet wird. Falls die Bestätigungsnachricht erwartet wird - und nur dann - wertet die Steuereinheit auch den zweiten Datenrahmen aus und stellt fest, ob er die Bestätigungsnachricht tatsächlich enthält. Falls die Bestätigungsnachricht erwartet wird und falls festgestellt wird, daß der zweite Datenrahmen die Bestätigungsnachricht enthält - und nur in diesem Falle - leitet die Steuereinheit den zweiten Datenrahmen nicht an die Kontrolleinheit weiter. Indem auch der erste Datenrahmen ausgewertet wird und z.B. anhand eines seiner Datenfelder überprüft wird, ob für seinen erfolgreichen Empfang eine Bestätigungsnachricht erwartet wird, kann die Auswertung des zweiten Datenrahmens in den Fällen, in denen keine Bestätigungsnachricht erwartet wird, vorteilhaft unterbleiben. Damit sinkt der Energieverbrauch der Sende-/Empfangseinheit weiter.

Auch die Benachrichtigung der Kontrolleinheit bei ausbleibender Bestätigungsnachricht oder ausbleibendem zweiten Datenrahmen nach erstmaligem oder wiederholten Senden des ersten Datenrahmens sowie das autonome nochmalige Senden des ersten Datenrahmens durch die Sende-/Empfangs-einheit kann vorteilhaft unterbleiben, wenn keine Bestätigungsnachricht erwartet wird, da hierdurch der Energieverbrauch der Sende-/Empfangseinheit sinkt.

In einer weiteren vorteilhaften Ausgestaltung weist die Steuereinheit vor dem erneuten Senden des ersten Datenrahmens die Empfangseinheit an, zu überprüfen, ob der für das erneute Senden des ersten Datenrahmens vorgesehene Übertragungskanal belegt ist. Nur dann, wenn der vorgesehene Übertragungskanal nicht belegt (also frei) ist, weist die Steuereinheit die Sendeeinheit an, den ersten Datenrahmen erneut zu senden. Durch die Überprüfung der Kanalbelegung auch vor dem erneuten Senden des ersten Datenrahmens durch die Sende-/Empfangseinheit wird der zum Betrieb der Kontrolleinheit (und damit auch der Sende-/Empfangsvorrichtung insgesamt) erforderliche Energiebedarf, aber auch der Gesamtspitzenstrombedarf weiter gesenkt.

In einer weiteren vorteilhaften Ausgestaltung ist die Steuereinheit ausgebildet, a) falls die Überprüfung ergeben hat, daß der vorgesehene Übertragungskanal belegt ist, die Empfangseinheit zu einem späteren Zeitpunkt erneut anzuweisen, zu überprüfen, ob der vorgesehene Übertragungskanal belegt ist, b) die Sendeeinheit nur dann anzuweisen, den ersten Datenrahmen zu senden, falls die erneute Überprüfung ergeben hat, daß der vorgesehene Übertragungskanal nicht belegt ist, und c) die Kontrolleinheit beispielsweise mittels eines Interrupts erst dann zu informieren, wenn eine vorgegebene Anzahl von Überprüfungen jeweils ergeben haben, daß der vorgesehene Übertragungskanal belegt ist. Indem die Kontrolleinheit erst nach einer vorgegebenen Anzahl von Überprüfungen und Feststellungen, daß der Kanal belegt ist, informiert wird, wird der zum Betrieb der Kontrolleinheit (und damit auch der Sende-/Empfangsvorrichtung insgesamt) erforderliche Energiebedarf, aber auch der Gesamtspitzenstrombedarf weiter gesenkt.

Die Erfindung wird nachfolgend anhand der in den schematischen Figuren der Zeichnung angegebenen Ausführungsbeispiele näher erläutert. Hierbei zeigen
Fig. 1 Beispiel eines "Wireless Personal Area Network" (WPAN) nach IEEE 802.15.4 mit erfindungsgemäßen Sende-/Empfangsvorrichtungen;
Fig. 2 Ausführungsbeispiel einer erfindungsgemäßen Sende-/Empfangsvorrichtung; und
Fig. 3 Schematische Darstellung exemplarischer Kommunikationsabläufe und des Stromverbrauchs über der Zeit.
In den Figuren sind gleiche und funktionsgleiche Elemente und Signale - sofern nicht anders angegeben - mit denselben Bezugszeichen versehen.

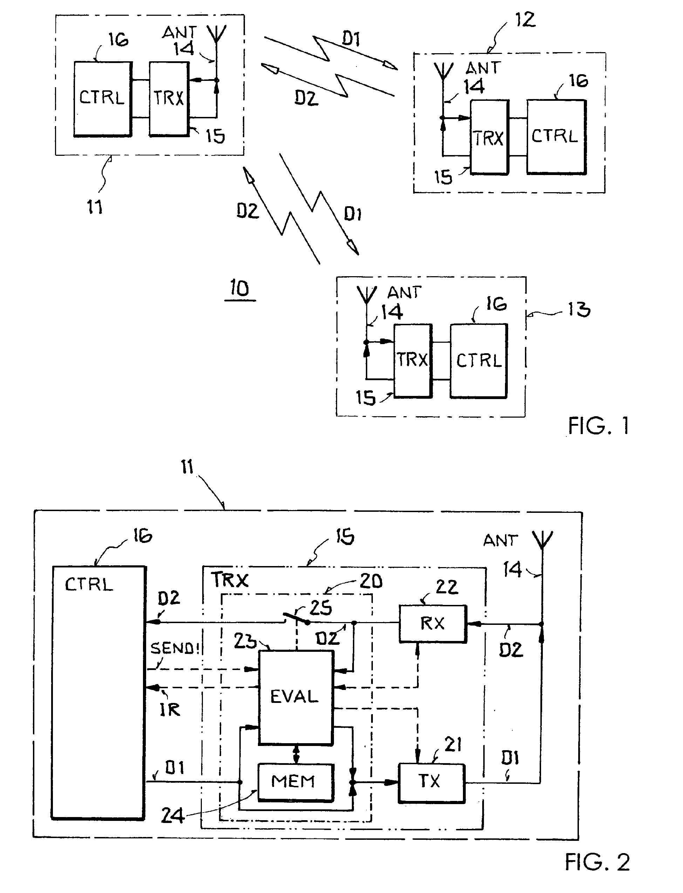

Figur 1 zeigt ein Beispiel eines WPAN-Datenübertragungssystems 10 nach dem Kommunikationsstandard IEEE 802.15.4. Es umfaßt drei Sende-/Empfangsvorrichtungen 11-13 in Form von ortsfesten oder mobilen Geräten, die mittels Funksignalen drahtlos Informationen austauschen. Bei der Sende-/Empfangsvorrichtung 11 handelt es sich um ein sog. Vollfunktionsgerät, das die Funktion des WPAN-Koordinators übernimmt, während es sich bei den Sende-/Empfangsvorrichtungen 12, 13 um sog. Teilfunktionsgeräte handelt, die dem Vollfunktionsgerät 11 zugeordnet sind und nur mit diesem Daten austauschen können. Neben der in Figur 1 dargestellten sternförmigen Netzwerktopologie, bei der die bidirektionale Datenübertragung nur zwischen jeweils einem der Teilfunktionsgeräte 12, 13 und dem Vollfunktionsgerät 11, nicht jedoch zwischen den Teilfunktionsgeräten 12, 13 erfolgen kann, sieht der Standard auch sog. "Peer-to-Peer"-Topologien vor, bei denen sämtliche Vollfunktionsgeräte mit jeweils allen anderen Vollfunktionsgeräten kommunizieren können.

Die Sende-/Empfangsvorrichtungen 11-13 umfassen jeweils eine Antenne 14, eine mit der Antenne verbundene Sende-/Empfangseinheit (transceiver, TRX) 15 zum Senden und Empfangen von Daten nach IEEE 802.15.4 und eine mit der Sende-/Empfangseinheit verbundene Kontrolleinheit (control unit, CTRL) 16 zur Steuerung der Sende-/Empfangseinheit 15 gemäß IEEE 802.15.4. Weiterhin beinhalten die Sende-/Empfangsvorrichtungen 11-13 jeweils eine in Fig. 1 nicht dargestellte Energieversorgungseinheit in Form einer Batterie etc. zur Energieversorgung der Einheiten 15, 16, sowie evtl. weitere Komponenten (Sensoren, Aktoren etc.).

Die Kontrolleinheit 16 beispielsweise der Sende-/Empfangsvorrichtung 11 ist ausgebildet, die Sende-/Empfangseinheit 15 "ihrer" Sende-/Empfangsvorrichtung (11) anzuweisen, einen ersten Datenrahmen D1 an eine zweite Sende-/Empfangsvorrichtung 12 oder 13 zu senden. Auf eine solche Anweisung hin sendet die Sende-/Empfangseinheit 15 der Sende-/Empfangsvorrichtung 11 den ersten Datenrahmen D1 an die zweite Sende-/Empfangsvorrichtung 12 bzw. 13.

Sendet die zweite Sende-/Empfangsvorrichtung 12 bzw. 13 einen zweiten Datenrahmen D2 an die erste Sende-/Empfangsvorrichtung 11, so wird der zweite Datenrahmen D2 von der Sende-/Empfangseinheit 15 der Sende-/Empfangsvorrichtung 11 empfangen und ggf. an die Kontrolleinheit 16 der Sende-/Empfangsvorrichtung 11 weitergeleitet und von dieser ausgewertet.

Neben den auf der Ebene der physikalischen Schicht (PHY) spezifizierten Funktionen nimmt die Sende-/Empfangseinheit 15 einige im folgenden näher beschriebene Funktionen wahr, die auf der Ebene der MAC-Schicht (medium access control layer) des Kommunikationsstandards (hier: IEEE 802.15.4) spezifiziert sind. Die Kontrolleinheit 16 ist demgegenüber "nur" mit den verbleibenden Funktionen der MAC-Schicht sowie ggf. mit Funktionen höherer Schichten betraut.

Die Sende-/Empfangseinheit 15 ist hierbei jeweils Teil einer (in Figur 1 nicht dargestellten) integrierten Schaltung, z.B. eines ASICs (application specific integrated circuit) oder eines ASSPs (application specific standard product), während die Kontrolleinheit 16 jeweils durch einen (ebenfalls nicht dargestellten) Mikrocontroller realisiert ist. Vorteilhaft weist jede Sende-/Empfangsvorrichtung nur eine (z.B. als ASIC oder ASSP ausgeführte) integrierte Schaltung auf, die die Funktionen ihrer Sende-/Empfangseinheit 15 und ihrer Kontrolleinheit 16 wahrnimmt.

Figur 2 zeigt ein Blockschaltbild einer erfindungsgemäßen Sende-/Empfangsvorrichtung 11. Die Bezugszeichen 14-16 bezeichnen wiederum die Antenne (ANT), die Sende-/Empfangseinheit (TRX) bzw. die Kontrolleinheit (CTRL).

Die Sende-/Empfangseinheit 15 beinhaltet eine mit der Antenne 14 verbundene Sendeeinheit (transmitter, TX) 21 zum Senden von ersten Datenrahmen D1 an eine zweite Sende-/Empfangsvorrichtung 12, 13 (siehe Fig. 1), eine ebenfalls mit der Antenne 14 verbundene Empfangseinheit (receiver, RX) 22 zum Empfangen von zweiten Datenrahmen D2 von der zweiten Sende-/Empfangsvorrichtung 12, 13 und eine mit der Sendeeinheit 21, der Empfangseinheit 22 und der Kontrolleinheit 16 verbundene Steuereinheit 20.

Die Sendeeinheit (TX) 21 wandelt den jeweils zu sendenden Datenstrom gemäß IEEE 802.15.4 in ein über die Antenne 14 abzustrahlendes Funksignal um. Soll die Übertragung z.B. im ISM-Frequenzband um 2,4 GHz erfolgen, so wird der zu sendende Datenstrom (Rohdatenrate: 250 kbit/s) zunächst in vier Bit breite Symbole (Symbolrate: 62,5 ksymbol/s) und diese in aufeinanderfolgende symbolwertspezifische PN-Sequenzen (pseudo noise) aus jeweils 32 Chips umgesetzt (Chiprate: 2 Mchip/s). Die aufeinanderfolgenden PN-Sequenzen werden anschließend Offset-QPSK-moduliert (quarternary phase shift keying), spektral in einen der 16 Kanäle im ISM-Frequenzband verschoben und schließlich für die Übertragung verstärkt. Die Sendeeinheit 21 nimmt also auf der Ebene der physikalischen Schicht (PHY) spezifizierte Funktionen wahr. Der zu sendende erste Datenrahmen D1 geht hierbei von einem MAC-Rahmen (MAC protocol data unit, MPDU) in einen längeren PHY-Rahmen (physical protocol data unit, PPDU) über, da z.B. ein Synchronisations-Header vorangestellt wird, um empfängerseitig eine Synchronisation auf den Datenstrom zu ermöglichen.

Die Empfangseinheit (RX) 22 wandelt ein von der Antenne 14 empfangenes und von der Sendeeinheit der zweiten Sende-/Empfangsvorrichtung 12, 13 (Fig. 1) nach IEEE 802.15.4 erzeugtes Funksignal möglichst fehlerfrei gemäß den Vorgaben dieses Standards in die gesendeten Daten um, indem das empfangene Funksignal unter anderem gefiltert, in das Basisband transformiert, demoduliert und die Daten detektiert (entschieden) werden. Auch die Empfangseinheit 22 nimmt also auf PHY-Ebene spezifizierte Funktionen wahr. Der empfangene zweite Datenrahmen D2 geht hierbei von einem PHY-Rahmen (PPDU) in einen kürzeren MAC-Rahmen (MPDU) über, da z.B. der Synchronisations-Header entfällt.

Die Steuereinheit 20 ist ausgebildet, von der Kontrolleinheit 16 z.B. mittels eines Befehls und/oder durch Übermittlung des ersten Datenrahmens D1 eine Anweisung zum Senden von D1 an die zweite Sende-/Empfangsvorrichtung 12 bzw. 13 zu erhalten. Sie ist weiterhin ausgebildet, den ersten Datenrahmen D1 in Form eines MAC-Rahmens an die Sendeeinheit 21 zu übermitteln und diese zum Senden von D1 aufzufordern. In Figur 2 ist dies durch die mit "Send!" bzw. "D1" bezeichneten Pfeile zwischen der Kontrolleinheit 16 und der Steuereinheit 20 sowie durch die Pfeile zwischen Steuereinheit 20 und Sendeeinheit 21 dargestellt.

Die Steuereinheit 20 ist außerdem ausgebildet, von der Empfangseinheit 22 zweite Datenrahmen D2 in Form von MAC-Rahmen zu erhalten und diese ggf. an die Kontrolleinheit 16 weiterzuleiten. In Figur 2 ist dies durch die Pfeile zwischen Steuereinheit 20 und Empfangseinheit 22 sowie den mit "D2" bezeichneten Pfeil zwischen der Steuereinheit 20 und der Kontrolleinheit 16 dargestellt.

Erfindungsgemäß übernimmt die Sende-/Empfangseinheit 15 auf MAC-Ebene spezifizierte Funktionalitäten des Auswertens empfangener zweiter Datenrahmen D2 nach erfolgtem Senden eines ersten Datenrahmens D1. Hierzu wertet die Steuereinheit 20 einen durch die Empfangseinheit 22 innerhalb einer vorgegebenen Zeitspanne T1 nach dem Senden des ersten Datenrahmens D1 empfangenen zweiten Datenrahmen D2 aus und überprüft, ob D2 eine Bestätigungsnachricht (ACK) für den erfolgreichen Empfang von D1 durch die zweite Sende-/Empfangsvorrichtung 12 enthält. Wird hierbei festgestellt, daß D2 die Bestätigungsnachricht (ACK) enthält, leitet die Steuereinheit 20 den zweiten Datenrahmen D2 nicht an die Kontrolleinheit 16 weiter. Dies ermöglicht es der Kontrolleinheit 16, die zur Senkung des Energieverbrauchs mindestens zwei Betriebsmodi mit unterschiedlich hohem Energieverbrauch aufweist, zum frühestmöglichen Zeitpunkt in einen Energiesparmodus ("Sleep mode") mit geringem Energieverbrauch zu wechseln, nämlich sobald sie die Sende-/ Empfangseinheit 15 angewiesen hat, den ersten Datenrahmen D1 zu senden. Damit ist sichergestellt, daß sich die Kontrolleinheit 16 im Energiesparmodus befindet, wenn die Sende-/Empfangseinheit 15 relativ viel Energie zum Senden von D1 benötigt. Hierdurch sinkt der Spitzenstromverbrauch der gesamten Sende-/Empfangsvorrichtung 11. Die Kontrolleinheit 16 geht zunächst davon aus, daß der Datenrahmen D1 erfolgreich von der zweiten Sende-/Empfangsvorrichtung 12 empfangen werden wird.

Die vorgegebene Zeitspanne T1 weist eine Dauer zwischen 150µs und 500µs auf, vorzugsweise zwischen 300µs und 400µs. Typischerweise beträgt sie ca. 350µs.

Zur Auswertung von D2 weist die Steuereinheit 20 eine mit der Empfangseinheit 22 verbundene Auswerteeinheit (EVAL) 23 auf. Ergibt die Auswertung, daß D2 die Bestätigungsnachricht (ACK) enthält, so unterbindet die Auswerteeinheit 23 die Weiterleitung von D2 an die Kontrolleinheit 16. Dies ist in Fig. 2 symbolisch durch ein Schaltelement 25 dargestellt, das von der Auswerteeinheit 23 entsprechend angesteuert, im genannten Fall also geöffnet und ansonsten geschlossen wird. In diesem Falle bleibt die Kontrolleinheit 16 im Energiesparmodus. Zur Bestimmung des Beginns der Zeitspanne T1 ist die Auswerteeinheit 23 vorzugsweise mit der Kontrolleinheit 16 und/oder mit der Sendeeinheit 21 verbunden.

Wird dagegen innerhalb der Zeitspanne T1 kein zweiter Datenrahmen empfangen oder festgestellt, daß der empfangene zweite Datenrahmen D2 die Bestätigungsnachricht (ACK) *nicht* enthält, so informiert die Auswerteeinheit 23 die Kontrolleinheit 16 hierüber mittels eines Interrupts (IR). Dies ist in Figur 2 durch den mit "IR" bezeichneten Pfeil von der Auswerteeinheit 23 zur Kontrolleinheit 16 dargestellt. Die Kontrolleinheit 16 verläßt daraufhin den Energiesparmodus.

In einem Ausführungsbeispiel übernimmt die Sende-/Empfangseinheit 15 auf MAC-Ebene spezifizierte Funktionalitäten des automatischen wiederholten Sendens von Datenrahmen bei ausbleibender Bestätigungsnachricht. Hierzu weist die Steuereinheit 20 beispielsweise einen als FIFO (first in, first out) konfigurierten RAM-Speicher 24 auf, in dem der erste Datenrahmen D1 beim ersten Sendeversuch z.B. durch die Auswerteeinheit 23 gespeichert wird. Statt wie oben beschrieben bei ausbleibender Bestätigungsnachricht (ACK) direkt einen Interrupt zu erzeugen, veranlaßt die Steuereinheit 20 (genauer: die Auswerteeinheit 23) in diesem Ausführungsbeispiel autonom, d.h. ohne Interaktion mit bzw. Anweisung durch die Kontrolleinheit 16, daß der Datenrahmen D1 aus dem Speicher 24 ausgelesen und durch die Sendeeinheit 21 erneut gesendet wird, falls innerhalb der vorgegebenen Zeitspanne T1 kein zweiter Datenrahmen empfangen wird oder falls festgestellt wird, daß der empfangene zweite Datenrahmen D2 die Bestätigungsnachricht nicht enthält. Bleibt auch nach erneutem Senden die Bestätigungsnachricht aus, so werden die Schritte des wiederholten Sendens von D1 und des Überprüfens, ob eine Bestätigungsnachricht empfangen wurde, entsprechend wiederholt. In Figur 2 sind die Schritte des erneuten Sendens von D1 aus dem Speicher 24 durch die Pfeile zwischen der Auswerteeinheit 23 einerseits und der Sendeeinheit 21 bzw. dem Speicher 24 andererseits angedeutet. Das Verfahren des autonomen wiederholten Sendens eines Datenrahmens durch die Sende-/Empfangseinheit 15 wird auch als "Auto-Retry" bezeichnet.

Erst wenn auch nach einer vorgegebenen Anzahl N von autonomen Veranlassungen, D1 erneut zu senden, innerhalb der vorgegebenen Zeitspanne T1 nach dem jeweiligen erneuten Senden kein zweiter Datenrahmen D2 empfangen wurde, der die Bestätigungsnachricht enthält, informiert die Auswerteeinheit 23 mittels eines Interrupts die Kontrolleinheit 16. Die Anzahl N der maximal durchgeführten Sendewiederholungen nimmt vorzugsweise einen Wert von eins bis fünf an. Typischerweise wird D1 maximal N=3-fach wiederholt und damit insgesamt maximal vierfach gesendet.

In einem weiteren Ausführungsbeispiel übernimmt die Sende-/Empfangseinheit 15 auf MAC-Ebene spezifizierte CSMA-CA-Funktionalitäten (carrier sense multiple access with collision avoidance), indem die Steuereinheit 20 autonom, d.h. ohne Interaktion mit der Kontrolleinheit 16 sicherstellt, daß der erste Datenrahmen D1 nur dann gesendet wird, wenn der hierfür vorgesehene Übertragungskanal frei ist. Hierzu weist die Auswerteeinheit 23 vor dem erstmaligen, im Falle des vorstehend beschriebenen "Auto-Retry"-Verfahrens aber auch vor jedem erneuten Senden von D1 die Empfangseinheit 22 an, mittels eines im Standard spezifizierten CCA-Verfahrens (clear channel assessment) zu überprüfen, ob der für das Senden von D1 vorgesehene Übertragungskanal belegt ist. Die Empfangseinheit 22 führt daraufhin das CCA-Verfahren durch und teilt der Auswerteeinheit 23 das Ergebnis der Überprüfung mit. Nur wenn diese Überprüfung ergeben hat, daß der vorgesehene Übertragungskanal *nicht* belegt - also frei - ist, weist die Auswerteeinheit 23 die Sendeeinheit 21 an, den Datenrahmen D1 an die zweite Sende-/Empfangsvorrichtung 12 zu senden.

Ist der vorgesehene Übertragungskanal dagegen *belegt,* so weist die Auswerteeinheit 23 die Empfangseinheit 22 zu einem späteren Zeitpunkt erneut an, das CCA-Verfahren durchzuführen. Ergibt diese erneute Überprüfung, daß der Kanal frei ist, weist die Auswerteeinheit 23 die Sendeeinheit 21 an, den Datenrahmen D1 zu senden. Ansonsten wird die Überprüfung der Kanalbelegung zu einem späteren Zeitpunkt wiederholt. Erst wenn insgesamt M Überprüfungen jeweils ergeben haben, daß der Kanal belegt ist, informiert die Auswerteeinheit 23 die Kontrolleinheit 16 hierüber mittels eines Interrupts. Vorzugsweise nimmt M einen Wert von drei bis sieben an, typischerweise ist M =5.

Die CSMA-CA/CCA-Funktionalität ist in Figur 2 durch die gestrichelten Pfeile zwischen der Auswerteeinheit 23 einerseits und der Empfangseinheit 22, der Sendeeinheit 21 und der Kontrolleinheit 16 ("IR") andererseits dargestellt.

Aufgrund der Übernahme der CSMA-CA-Funktionalitäten durch die Sende-/Empfangseinheit 15 muß die Kontrolleinheit 16 weder gemäß einem CSMA-CA-Algorithmus die Empfangseinheit 22 zur Durchführung von CCA-Verfahren anweisen noch deren Ergebnisse auswerten. Hierdurch kann die Kontrolleinheit 16 früher in den Energiesparmodus wechseln.

In einem weiteren Ausführungsbeispiel übernimmt die Sende-/Empfangseinheit 15 auf MAC-Ebene spezifizierte Funktionalitäten des Auswertens von zu sendenden Datenrahmen. Die Auswerteeinheit 23 der Steuereinheit 20 wertet in diesem Ausführungsbeispiel den zu sendenden Datenrahmen D1 aus und überprüft z.B. anhand eines bestimmten Datenfeldes von D1, ob im Falle seines erfolgreichen Empfangs durch die zweite Sende-/Empfangsvorrichtung 12, 13 überhaupt eine Bestätigungsnachricht (ACK) erwartet wird. Nur in diesem Falle wird der zweite Datenrahmen D2 wie vorstehend beschrieben ausgewertet, auf das Vorhandensein der Bestätigungsnachricht (ACK) überprüft und nicht an die Kontrolleinheit 16 weitergeleitet, falls festgestellt wird, daß der zweite Datenrahmen D2 die Bestätigungsnachricht enthält. Auch das vorstehend beschriebene Auto-Retry-Verfahren und die ebenfalls vorstehend beschriebene Interruptgenerierung bei ausbleibender Bestätigungsnachricht nach erstmaligem oder wiederholtem Senden wird in diesem Ausführungsbeispiel nur dann durchgeführt, wenn überhaupt die Bestätigungsnachricht erwartet wird.

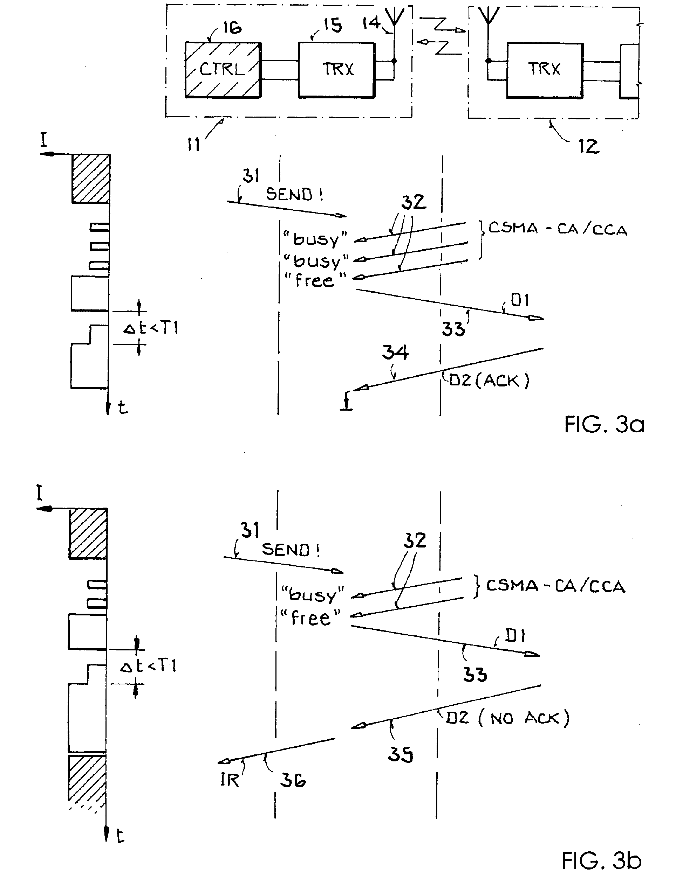

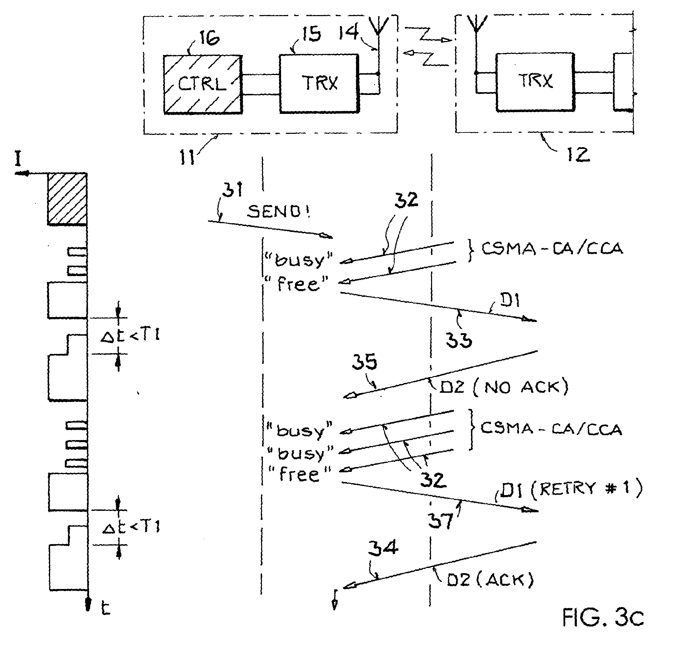

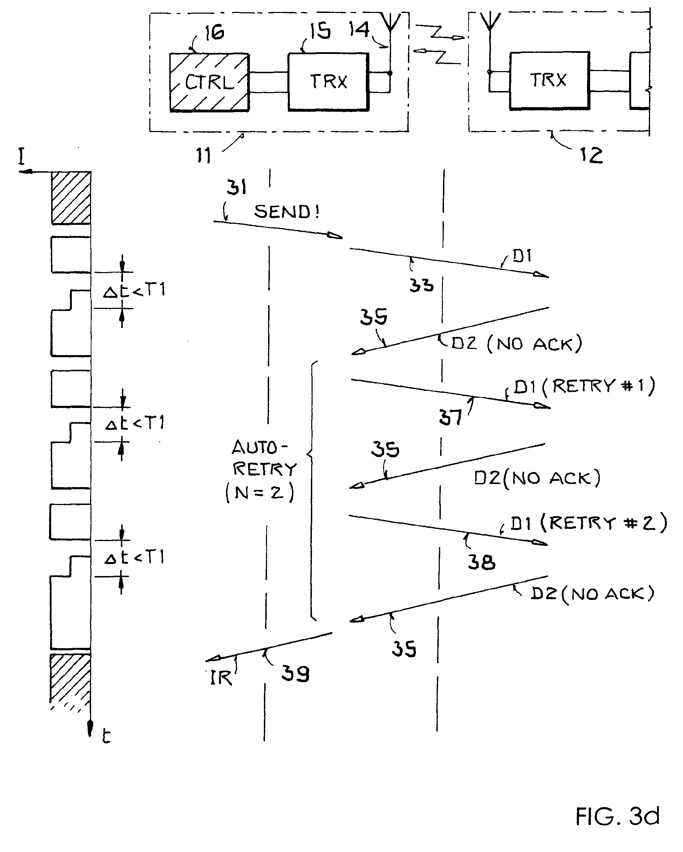

Figur 3 zeigt in den Teilbildern a) bis d) schematisch vier exemplarische Kommunikationsabläufe zwischen der ersten (Sende-/Empfangs)Vorrichtung 11 und der zweiten (Sende-/Empfangs)Vorrichtung 12 sowie den damit verbundenen Energieverbrauch durch die erste Vorrichtung 11. Die einzelnen Kommunikationen zwischen der Kontrolleinheit 16 und der Sende-/Empfangseinheit 15 der ersten Vorrichtung 11 sowie zwischen der Sende-/Empfangseinheit 15 der ersten Vorrichtung 11 und der zweiten Vorrichtung 12 sind hierbei durch Pfeile unterhalb der jeweils beteiligten Einheiten symbolisiert, wobei der zeitliche Verlauf der Kommunikationen von oben nach unten dargestellt ist. Für jeden Kommunikationsablauf ist jeweils links in den Teilbildern der von der ersten Vorrichtung 11 benötigte Strom I über der Zeit t von oben nach unten aufgetragen. Der Stromverbrauch der Kontrolleinheit 16 ist hierbei schraffiert, während derjenige der Sende-/Empfangseinheit 15 unschraffiert dargestellt ist.

In Fig. 3a ist ein erster Kommunikationsablauf dargestellt, bei dem die erste Vorrichtung 11 einen ersten Datenrahmen D1 an die zweite Vorrichtung 12 sendet und daraufhin von der zweiten Vorrichtung 12 einen zweiten Datenrahmen D2 mit einer Bestätigungsnachricht für den erfolgreichen Empfang von D1 erhält.

Zunächst übermittelt die Kontrolleinheit 16 einen Sendebefehl und/oder den ersten Datenrahmen D1 an die Sende-/Empfangseinheit 15. Dies ist in Fig. 3a durch den Pfeil 31 dargestellt. Daraufhin wechselt die Kontrolleinheit 16 von einem aktiven Betriebszustand mit einem relativ hohen Energieverbrauch in einen Energiesparmodus mit geringem Energieverbrauch, wie aus dem links in Fig. 3a schraffiert aufgetragenen Stromverbrauch der Kontrolleinheit zu erkennen ist. Sobald der Befehl 31 abgesetzt ist, sinkt der Stromverbrauch der Kontrolleinheit 16 auf einen vernachlässigbaren Wert, z.B. auf 1/1000 des vorherigen wertes.

Im folgenden überprüft die Sende-/Empfangseinheit 15 mittels eines CSMA-CA/CCA-Verfahrens in bis zu M=5 Versuchen, ob der Übertragungskanal belegt ist. Dies ist in Fig. 3a durch die Pfeile 32 sowie links durch die der Sende-/Empfangseinheit 15 zuzuordnenden Stromimpulse zu erkennen, wobei in diesem Beispiel angenommen wird, daß die ersten beiden Überprüfungen zur Feststellung eines belegten Kanals ("busy") führen, während die dritte Überprüfung einen freien Kanal ("free") ergibt. Im Anschluß an die dritte Kanalbelegungsprüfung 32 sendet die Sende-/Empfangseinheit 15 der ersten Vorrichtung 11 daher den ersten Datenrahmen D1 zur zweiten Vorrichtung 12 (siehe Pfeil 33). Während des Sendens ergibt sich ein temporär erhöhter Energieverbrauch der Sende-/Empfangseinheit 15, wie aus dem links des Pfeils 33 dargestellten Stromverbrauch ersichtlich ist. In kausalem Zusammenhang mit diesem Sendevorgang wird ein Timer gestartet.

Nach dem Senden von D1 horcht die Sende-/Empfangseinheit 15 im Rahmen eines sog. "Listen Mode", ob Datenrahmen empfangen werden können. Dies ist links in Fig. 3a durch einen Vorimpuls dargestellt, der einen Stromverbrauch in der Größenordnung der CSMA-CA/CCA-Impulse hat. Nach Ablauf einer Zeitspanne Δt seit dem Senden von D1, die in diesem Beispiel kürzer als die vorgegebene Zeitspanne T1 ist, empfängt die Sende-/Empfangseinheit 15 von der zweiten Vorrichtung 12 gemäß Pfeil 34 einen zweiten Datenrahmen D2 und überprüft diesen dahingehend, ob er eine Bestätigungsnachricht (ACK) für den erfolgreichen Empfang von D1 durch die zweite Vorrichtung 12 enthält. Während dieser Überprüfung ist der Stromverbrauch der Sende-/Empfangseinheit 15 deutlich erhöht. Ergibt die Überprüfung, daß D2 die Bestätigungsnachricht (ACK) enthält - in Fig. 3a wird hiervon ausgegangen - so unterbindet die Sende-/Empfangseinheit 15 die Weiterleitung von D2 an die Kontrolleinheit 16. Die Kontrolleinheit 16 kann daher während des gesamten Kommunikationsablaufes ab dem Absetzen des Sendebefehls 31 im Energiesparmodus verbleiben.

Wie aus dem linken Teil von Fig. 3a zu erkennen ist, existiert während dieses Kommunikationsablaufs kein Zeitpunkt, in dem sowohl die Sende-/Empfangseinheit 15 als auch die Kontrolleinheit 16 gleichzeitig einen erhöhten Strombedarf aufweisen. Der für den Betrieb der Vorrichtung 11 benötigte Spitzenstrom entspricht daher im wesentlichen dem Maximalstrom der Kontrolleinheit 16 bzw. demjenigen der Sende-/Empfangseinheit 15 und liegt damit deutlich unter der Summe dieser beiden Maximalströme. Der Vollständigkeit halber sei darauf hingewiesen, daß auch die Sende-/Empfangseinheit 15 in inaktiven Zeitabschnitten einen gewissen (Mindest)Energiebedarf hat, der jedoch vernachlässigbar klein und daher nicht in Figur 3 dargestellt ist.

In Fig. 3b ist ein zweiter Kommunikationsablauf dargestellt, bei dem die Sende-/Empfangseinheit 15 nach dem Senden von D1 von der zweiten Vorrichtung 12 keinen zweiten Datenrahmen D2 mit einer Bestätigungsnachricht erhält.

Bis zum Senden des ersten Datenrahmens D1 entspricht der zweite Kommunikationsablauf dem vorstehend beschriebenen ersten Ablauf, so daß bis zum Starten des Timers sowohl die Pfeile 31-33 als auch der Stromverbrauch in den Figuren 3a und 3b weitgehend übereinstimmen. Abweichend von Fig. 3a wird in Figur 3b angenommen, daß schon die zweite Überprüfung der Kanalbelegung einen freien Kanal ergibt, was an den beiden Pfeilen 32 und den beiden zugehörigen Stromimpulsen zu erkennen ist.

Nach Ablauf einer Zeitspanne Δt, die in diesem Beispiel wiederum kürzer als die vorgegebene Zeitspanne T1 ist, empfängt die Sende-/Empfangseinheit 15 von der zweiten Vorrichtung 12 gemäß Pfeil 35 einen zweiten Datenrahmen D2 und überprüft diesen auf das Vorliegen einer Bestätigungsnachricht (ACK). Im Gegensatz zum ersten Kommunikationsablauf ist dies hier nicht der Fall ("NO ACK"), weshalb die Sende-/Empfangseinheit 15 die Kontrolleinheit 16 mittels eines durch den Pfeil 36 dargestellten Interrupts (IR) benachrichtigt. Vom Empfangen von D2 und Überprüfen auf eine Bestätigungsnachricht bis zum Senden des Interrupts weist die Sende-/Empfangseinheit 15 einen erhöhten Strombedarf auf, der nach Absetzen des Interrupts auf einen vernachlässigbaren Wert sinkt.

Aufgrund des Interrupts 36 verläßt die Kontrolleinheit 16 den Energiesparmodus und tritt in einen aktiven Betriebszustand ein. In der Folgezeit hat die Kontrolleinheit 16 einen erhöhten Strombedarf, um entsprechend auf die ausgebliebene Bestätigungsnachricht zu reagieren. So kann die Kontrolleinheit beispielsweise höhere Schichten des Kommunikationsstandards von diesem Umstand in Kenntnis setzen, ein nochmaliges Senden von D1 veranlassen etc. pp..

Auch im Falle des zweiten Kommunikationsablaufs weisen die Sende-/Empfangseinheit 15 und die Kontrolleinheit 16 einen erhöhten Strombedarf immer nur in sich nicht überlappenden Zeitabschnitten auf, so daß der für den Betrieb der Vorrichtung 11 benötigte Spitzenstrom im wesentlichen dem Maximalstrom der Kontrolleinheit 16 bzw. demjenigen der Sende-/Empfangseinheit 15 entspricht.

Auch im nicht in Fig. 3b dargestellten Fall, bei dem der Timer so lange läuft, bis die vorgegebene Zeitspanne T1 erreicht ist, ohne daß ein zweiter Datenrahmen D2 empfangen wird, informiert die Sende-/Empfangseinheit 15 die Kontrolleinheit 16 mittels eines Interrupts 36. Im wesentlichen ergeben sich in diesem Falle mit Fig. 3b vergleichbare Verhältnisse, so daß auch dann die obigen Aussagen zum benötigten Spitzenstrom zutreffen.

Sollte auch nach M=5 zeitversetzten Überprüfungen der Kanalbelegung kein freier Kanal festgestellt werden können, so benachrichtigt die Sende-/Empfangseinheit 15 die Kontrolleinheit 16 vorzugsweise mittels eines Interrupts von diesem Umstand. Auch in diesem Falle sinkt der Strombedarf der Sende-/Empfangseinheit 15 mit dem Absetzen des Interrupts, während derjenige der Kontrolleinheit 16 im Zuge weiterer Maßnahmen ansteigt. Auch in diesem Fall gelten die obigen Aussagen zum von der Vorrichtung 11 benötigten Spitzenstrom.

In Fig. 3c ist ein dritter Kommunikationsablauf dargestellt, bei dem die Sende-/Empfangseinheit 15 bei zunächst ausbleibender Bestätigungsnachricht das Auto-Retry-Verfahren autonom durchführt und die erste Sendewiederholung von D1 erfolgreich verläuft.

Bis zum Empfangen des keine Bestätigungsnachricht enthaltenden zweiten Datenrahmens D2 (NO ACK) entspricht der dritte Kommunikationsablauf dem vorstehend beschriebenen zweiten Ablauf, so daß bis zum erstmaligen Empfang von D2 die Pfeile 31-33, 35 und der Strom I in den Fig. 3b, 3c übereinstimmen.

Anstatt einen Interrupt zu erzeugen, führt die Sende-/Empfangseinheit 15 beim dritten Kommunikationsablauf gemäß Figur 3c das Auto-Retry-Verfahren durch. Vor dem erneuten Senden von D1 prüft die Sende-/Empfangseinheit 15 nochmals die Kanalbelegung. Nachdem im Falle der Fig. 3c zwei Überprüfungen einen belegten Kanal ermittelt haben, wird bei der dritten Prüfung ein freier Kanal erkannt (siehe die unteren drei Pfeile 32 in Fig. 3c). Kurz darauf sendet die Sende-/Empfangseinheit 15 den ersten Datenrahmen D1 erneut an die zweite Vorrichtung 12, wie am Pfeil 37 ("Retry#1") zu erkennen ist, und startet den Timer erneut.

Nach Ablauf einer Zeitspanne Δt, die in diesem Beispiel kürzer als die vorgegebene Zeitspanne T1 ist, empfängt die Sende-/Empfangseinheit 15 von der zweiten Vorrichtung 12 gemäß Pfeil 34 einen zweiten Datenrahmen D2 und überprüft diesen auf das Vorliegen einer Bestätigungsnachricht (ACK). Dies ist hier analog zum ersten Kommunikationsablauf (Fig. 3a) der Fall, weshalb die Sende-/Empfangseinheit 15 den zweiten Datenrahmen D2 nicht an die Kontrolleinheit 16 weiterleitet und diese im Energiesparmodus verbleibt.

Da die Kontrolleinheit 16 auch hier nach Absetzen des anfänglichen Sendebefehls 31 durchgängig im Energiesparmodus verbleibt, überlappen sich die Zeiten, in denen die Kontrolleinheit 16 und die Sende-/Empfangseinheit 15 einen erhöhten Energieverbrauch aufweisen, nicht, so daß sich vorteilhaft ein geringer Spitzenstrombedarf für die Vorrichtung 11 ergibt.

In Figur 3d ist ein vierter Kommunikationsablauf dargestellt, bei dem die Sende-/Empfangseinheit 15 bei zunächst ausbleibender Bestätigungsnachricht das Auto-Retry-Verfahren mit maximal N=2 Sendewiederholungen autonom durchführt und auch die zweite Sendewiederholung erfolglos bleibt.

Bis zum erstmaligen erneuten Senden ("Retry#1" 37) ergeben sich im Vergleich zu Fig. 3c unveränderte Verhältnisse. Aus Gründen der Übersichtlichkeit wird in Fig. 3d jedoch auf die Darstellung des vorzugsweise vor jedem Senden von D1 durchzuführenden CSMA-CA/CCA-Verfahrens zur Überprüfung der Kanalbelegung verzichtet (Pfeile 32 in Fig. 3a-c).

Als Antwort auf die erste Sendewiederholung 37 empfängt die Sende-/Empfangseinheit 15 innerhalb der vorgegebenen Zeitspanne T1 nach der ersten Sendewiederholung 37 von der zweiten Vorrichtung 12 einen weiteren zweiten Datenrahmen D2, der ebenfalls keine Bestätigungsnachricht enthält (NO ACK, mittlerer Pfeil 35 in Fig. 3d). Nach Feststellung dieses Sachverhaltes wiederholt die Sende-/Empfangseinheit 15 den Sendevorgang von D1 zum zweiten Mal ("Retry#2" 38). Wiederum geht hierauf innerhalb der Zeitspanne T1 ein weiterer zweiter Datenrahmen D2 ohne Bestätigungsnachricht ein (NO ACK), wie anhand des unteren Pfeils 35 ersichtlich ist. Da die maximale Zahl von Sendewiederholungen erreicht ist (N=2), erzeugt die Sende-/Empfangseinheit 15 nunmehr einen Interrupt und informiert die Kontrolleinheit 16 über die auch nach zwei Wiederholungsversuchen erfolglosen Sendebemühungen (siehe Pfeil 39). Die Kontrolleinheit 16 verläßt daraufhin den Energiesparmodus und informiert beispielsweise höhere Schichten des Kommunikationsstandards über die gescheiterten Sendeversuche.

Auch im Falle des vierten Kommunikationsablaufes überlappen sich die Zeitspannen erhöhten Strombedarfs der Sende-/Empfangseinheit 15 nicht mit denjenigen der Kontrolleinheit 16, so daß in allen betrachteten Fällen der Spitzenstrombedarf der ersten Vorrichtung 11 im wesentlichen mit dem Maximalstrom der Sende-/Empfangseinheit 15 bzw. demjenigen der Kontrolleinheit 16 übereinstimmt und damit deutlich unter der Summe dieser beiden Maximalströme liegt.

Obgleich die vorliegende Erfindung vorstehend anhand von Ausführungsbeispielen beschrieben wurde, ist sie nicht darauf beschränkt, sondern auf vielfältige Weise modifizierbar. So ist die Erfindung beispielsweise weder auf WPANs an sich, noch auf WPANs gemäß IEEE 802.15.4 bzw. die dort spezifizierten Bandspreiz-, Modulations- und Multiplex-Zugriffsverfahren, Frequenzbänder, Bit-, Symbol- und Chipraten und -stufigkeiten, noch auf die angegebenen Werte der Zwischenfrequenz, der Abtastfrequenz, Filterbandbreiten, -typen und -ordnungen etc. beschränkt. Die Erfindung kann vielmehr in unterschiedlichsten drahtlosen oder -gebundenen digitalen Kommunikationssystemen vorteilhaft eingesetzt werden.

### Bezugszeichenliste

- 10: Datenübertragungssystem / "Wireless Personal Area Network" (WPAN) nach dem IEEE-Standard 802.15.4
- 11: Sende-/Empfangsvorrichtung
- 12, 13: zweite Sende-/Empfangsvorrichtung
- 14: Antenne
- 15: Sende-/Empfangseinheit (transceiver, TRX)
- 16: Kontrolleinheit (CTRL)
- 20: Steuereinheit
- 21: Sendeeinheit (transmitter, TX)
- 22: Empfangseinheit (receiver, RX)
- 23: Auswerteeinheit
- 24: Speicher
- 25: Schaltelement
- 31: Sendebefehl
- 32: CSMA-CA/CCA-Kommunikation
- 33: erstmaliges Senden des Datenrahmens D1
- 34: Empfangen eines zweiten Datenrahmens D2, der ein ACK aufweist
- 35: Empfangen eines zweiten Datenrahmens D2, der kein ACK aufweist
- 36: Übermitteln eines Interrupts an die Kontrolleinheit
- 37: erste Sendewiederholung des Datenrahmens D1
- 38: zweite Sendewiederholung des Datenrahmens D1
- 39: Übermitteln eines Interrupts an die Kontrolleinheit

- ACK: acknowledgment (frame), Empfangsbestätigungsnachricht/-rahmen
- ASIC: application specific integrated circuit
- ASSP: application specific standard product
- CCA: clear channel assessment
- CSMA-CA: carrier sense multiple access with collision avoidance
- CTRL: Kontrolleinheit
- FIFO: first in, first out
- IR: Interrupt
- ISM: industrial, scientific, medical (Frequenzband bei 2,4 GHz)
- MAC: medium access control (layer)
- MPDU: MAC protocol data unit
- PHY: physical (layer)
- PPDU: physical protocol data unit (Datenrahmen)
- RAM: random access memory
- RX: Empfangseinheit, receiver
- TRX: Sende-/Empfangseinheit, transceiver
- TX: Sendeeinheit, transmitter
- WPAN: Wireless Personal Area Network

- D1, D2: erste(r) bzw. zweite(r) Datenrahmen
- I: Strom
- M: maximale Gesamtzahl der CCA-Überprüfungen
- N: maximale Anzahl der Sendewiederholungen
- t: Zeit
- T1: vorgegebene Zeitspanne

## Patentansprüche

1. Sende-/Empfangsvorrichtung (11), insbesondere für ein Datenübertragungssystem (10) nach dem IEEE-Standard 802.15.4, beinhaltend:
a) eine Antenne (14),
b) eine Sende-/Empfangseinheit (15) zum Senden und Empfangen von Daten nach einem Kommunikationsstandard, die eine mit der Antenne (14) verbundene Sendeeinheit (21) zum Senden von ersten Datenrahmen (D1) an eine zweite Sende-/EMpfangsvorrichtung (12) und eine mit der Antenne (14) verbundene Empfangseinheit (22) zum Empfangen von zweiten Datenrahmen (D2) von der zweiten Sende-/Empfangsvorrichtung (12) aufweist, und
c) eine mit der Sende-/Empfangseinheit (15) verbundene Kontrolleinheit (16) zur Steuerung der Sende-/Empfangseinheit (15), wobei die Kontrolleinheit (16) ausgebildet ist, (c1) die Sende-/Empfangseinheit (15) anzuweisen, einen ersten Datenrahmen (D1) zu senden und (c2) von der Sende-/Empfangseinheit (15) zweite Datenrahmen (D2) zu empfangen,
**dadurch gekennzeichnet, daß**
die Sende-/Empfangseinheit (15) eine mit der Empfangseinheit (22) und der Kontrolleinheit (16) verbundene Steuereinheit (20) aufweist, die ausgebildet ist,
d) einen innerhalb einer vorgegebenen Zeitspanne (T1) nach dem Senden des ersten Datenrahmens (D1) durch die Empfangseinheit (22) empfangenen zweiten Datenrahmen (D2) auszuwerten und festzustellen, ob der zweite Datenrahmen (D2) eine Bestätigungsnachricht (ACK) für den erfolgreichen Empfang des ersten Datenrahmens (D1) durch die zweite Sende-/Empfangsvorrichtung (12) enthält, und
e) den zweiten Datenrahmen (D2) nicht an die Kontrolleinheit (16) weiterzuleiten, falls festgestellt wird, daß er die Bestätigungsnachricht (ACK) enthält.

2. Sende-/Empfangsvorrichtung nach Anspruch 1, **dadurch gekennzeichnet, daß** die Kontrolleinheit (16) mindestens zwei Betriebsmodi mit unterschiedlich hohem Energieverbrauch aufweist und ausgebildet ist, in einen Energiesparmodus mit geringem Energieverbrauch zu wechseln, sobald die Kontrolleinheit (16) die Sende-/Empfangseinheit (15) angewiesen hat, den ersten Datenrahmen (D1) zu senden.

3. Sende-/Empfangsvorrichtung nach Anspruch 2, **dadurch gekennzeichnet, daß** die Kontrolleinheit (16) ausgebildet ist, den Energiesparmodus zu verlassen, wenn sie einen Interrupt von der Steuereinheit (20) empfängt.

4. Sende-/Empfangsvorrichtung nach einem der vorhergehenden Ansprüche, **dadurch gekennzeichnet, daß** die Steuereinheit (20) ausgebildet ist,
a) vor dem Senden des ersten Datenrahmens (D1) die Empfangseinheit (22) anzuweisen, zu überprüfen, ob der für das Senden des ersten Datenrahmens (D1) vorgesehene Übertragungskanal belegt ist, und
b) die Sendeeinheit (21) nur dann anzuweisen, den ersten Datenrahmen (D1) zu senden, falls die Überprüfung ergeben hat, daß der vorgesehene Übertragungskanal nicht belegt ist.

5. Sende-/Empfangsvorrichtung nach einem der vorhergehenden Ansprüche, **dadurch gekennzeichnet, daß** die Steuereinheit (20) ausgebildet ist, die Kontrolleinheit (16) beispielsweise mittels eines Interrupts zu informieren, falls innerhalb der vorgegebenen Zeitspanne (T1) kein zweiter Datenrahmen (D2) empfangen wird oder falls festgestellt wird, daß der zweite Datenrahmen (D2) die Bestätigungsnachricht (ACK) nicht enthält.

6. Sende-/Empfangsvorrichtung nach einem der Ansprüche 1 bis 4, **dadurch gekennzeichnet, daß** die Steuereinheit (20) mit der Sendeeinheit (21) verbunden ist und einen Speicher (24) aufweist, wobei die Steuereinheit (20) ausgebildet ist,
a) den ersten Datenrahmen (D1) im Speicher (24) abzuspeichern, und
b) ohne Anweisung durch die Kontrolleinheit (16) zu veranlassen, daß die Sendeeinheit (21) den ersten Datenrahmen (D1) erneut an die zweite Sende-/Empfangsvorrichtung (12) sendet, falls innerhalb der vorgegebenen Zeitspanne (T1) kein zweiter Datenrahmen (D2) empfangen wird oder falls festgestellt wird, daß der zweite Datenrahmen (D2) die Bestätigungsnachricht (ACK) nicht enthält.

7. Sende-/Empfangsvorrichtung nach Anspruch 6, **dadurch gekennzeichnet, daß** die Steuereinheit (20) ausgebildet ist, die Kontrolleinheit (16) beispielsweise mittels eines Interrupts erst dann zu informieren, wenn auch nach einer vorgegebenen Anzahl (N) von nicht durch die Kontrolleinheit (16) angewiesenen Veranlassungen, den ersten Datenrahmen (D1) erneut an die zweite Sende-/Empfangsvorrichtung (12) zu senden, innerhalb der vorgegebenen Zeitspanne (T1) nach dem jeweiligen erneuten Senden kein zweiter Datenrahmen (D2) empfangen wurde, der die Bestätigungsnachricht (ACK) enthält.

8. Sende-/Empfangsvorrichtung nach einem der Ansprüche 1 bis 4, **dadurch gekennzeichnet, daß** die Steuereinheit (20) ausgebildet ist,
a) den ersten Datenrahmen (D1) auszuwerten und festzustellen, ob im Falle seines erfolgreichen Empfangs durch die zweite Sende-/Empfangsvorrichtung (12) die Bestätigungsnachricht (ACK) erwartet wird,
b) falls die Bestätigungsnachricht (ACK) erwartet wird, den zweiten Datenrahmen (D2) auszuwerten und festzustellen, ob er die Bestätigungsnachricht (ACK) enthält, und
c) den zweiten Datenrahmen (D2) nicht an die Kontrolleinheit (16) weiterzuleiten, falls die Bestätigungsnachricht (ACK) erwartet wird und falls festgestellt wird, daß der zweite Datenrahmen (D2) die Bestätigungsnachricht (ACK) enthält.

9. Sende-/Empfangsvorrichtung nach Anspruch 8, **dadurch gekennzeichnet, daß** die Steuereinheit (20) ausgebildet ist, die Kontrolleinheit (16) beispielsweise mittels eines Interrupts zu informieren, falls die Bestätigungsnachricht (ACK) erwartet wird und, falls innerhalb der vorgegebenen Zeitspanne (T1) kein zweiter Datenrahmen (D2) empfangen wird oder festgestellt wird, daß der zweite Datenrahmen (D2) die Bestätigungsnachricht (ACK) nicht enthält.

10. Sende-/Empfangsvorrichtung nach Anspruch 8, **dadurch gekennzeichnet, daß** die Steuereinheit (20) mit der Sendeeinheit (21) verbunden ist und einen Speicher (24) aufweist, wobei die Steuereinheit (20) ausgebildet ist,
a) den ersten Datenrahmen (D1) im Speicher (24) abzuspeichern, und
b) ohne Anweisung durch die Kontrolleinheit (16) zu veranlassen, daß die Sendeeinheit (21) den ersten Datenrahmen (D1) erneut an die zweite Sende-/Empfangsvorrichtung (12) sendet, falls die Bestätigungsnachricht (ACK) erwartet wird und, falls innerhalb der vorgegebenen Zeitspanne (T1) kein zweiter Datenrahmen (D2) empfangen wird oder festgestellt wird, daß der zweite Datenrahmen (D2) die Bestätigungsnachricht (ACK) nicht enthält.

11. Sende-/Empfangsvorrichtung nach Anspruch 10, **dadurch gekennzeichnet, daß** die Steuereinheit (20) ausgebildet ist, die Kontrolleinheit (16) beispielsweise mittels eines Interrupts erst dann zu informieren, wenn die Bestätigungsnachricht (ACK) erwartet wird und auch nach einer vorgegebenen Anzahl (N) von nicht durch die Kontrolleinheit (16) angewiesenen Veranlassungen, den ersten Datenrahmen (D1) erneut an die zweite Sende-/Empfangsvorrichtung (12) zu senden, innerhalb der vorgegebenen Zeitspanne (T1) nach dem jeweiligen erneuten Senden kein zweiter Datenrahmen (D2) empfangen wurde, der die Bestätigungsnachricht (ACK) enthält.

12. Sende-/Empfangsvorrichtung nach Anspruch 7 oder 11, **dadurch gekennzeichnet, daß** die vorgegebene Anzahl (N) von Veranlassungen, den ersten Datenrahmen (D1) erneut an die zweite Sende-/Empfangsvorrichtung (12) zu senden, einen Wert im Bereich von eins bis fünf aufweist.

13. Sende-/Empfangsvorrichtung nach Anspruch 6 oder 10, **dadurch gekennzeichnet, daß** die Steuereinheit (20) ausgebildet ist,
a) vor dem erneuten Senden des ersten Datenrahmens (D1) die Empfangseinheit (22) anzuweisen, zu überprüfen, ob der für das erneute Senden des ersten Datenrahmens (D1) vorgesehene Übertragungskanal belegt ist, und
b) die Sendeeinheit (21) nur dann anzuweisen, den ersten Datenrahmen (D1) erneut zu senden, falls die Überprüfung ergeben hat, daß der vorgesehene Übertragungskanal nicht belegt ist.

14. Sende-/Empfangsvorrichtung nach Anspruch 4 oder 13, **dadurch gekennzeichnet, daß** die Steuereinheit (20) ausgebildet ist,
a) falls die Überprüfung ergeben hat, daß der vorgesehene Übertragungskanal belegt ist, die Empfangseinheit (22) zu einem späteren Zeitpunkt erneut anzuweisen, zu überprüfen, ob der vorgesehene Übertragungskanal belegt ist,
b) die Sendeeinheit (21) nur dann anzuweisen, den ersten Datenrahmen (D1) zu senden, falls die erneute Überprüfung ergeben hat, daß der vorgesehene Übertragungskanal nicht belegt ist, und
c) die Kontrolleinheit (16) beispielsweise mittels eines Interrupts erst dann zu informieren, wenn eine vorgegebene Anzahl (M) von Überprüfungen jeweils ergeben haben, daß der vorgesehene Übertragungskanal belegt ist.

15. Sende-/Empfangsvorrichtung nach Anspruch 14, **dadurch gekennzeichnet, daß** die vorgegebene Anzahl (M) von Überprüfungen einen Wert im Bereich von drei bis sieben aufweist.

16. Sende-/Empfangsvorrichtung nach einem der vorhergehenden Ansprüche, **dadurch gekennzeichnet, daß** die vorgegebenen Zeitspanne (T1) eine Dauer zwischen 150µs und 500µs, vorzugsweise zwischen 300µs und 400µs, aufweist.

17. Sende-/Empfangsvorrichtung nach einem der vorhergehenden Ansprüche, wobei die Sende-/Empfangseinheit (15) ausgebildet ist, die Funktionalitäten der physikalischen Schicht sowie einige erste Funktionalitäten der MAC-Schicht des Kommunikationsstandards auszuführen und die Kontrolleinheit (16) ausgebildet ist, nur die verbleibenden zweiten Funktionalitäten der MAC-Schicht sowie ggf. Funktionalitäten höherer Schichten auszuführen.

18. Sende-/Empfangsvorrichtung nach einem der vorhergehenden Ansprüche, wobei die Sende-/Empfangseinheit (15) als ASIC oder ASSP realisiert ist und/oder die Kontrolleinheit (16) als Microcontroller realisiert ist.

19. Sende-/Empfangsvorrichtung nach einem der Ansprüche 1 bis 17, wobei die Sende-/Empfangseinheit (15) und die Kontrolleinheit (16) durch genau eine integrierte Schaltung realisiert sind.
